# EUROPEAN PATENT APPLICATION

(11) **EP 4 566 868 A1**
(43) Date of publication of application: **11.06.2025**
(21) Application number: 24214446.7
(22) Date of filing: 21.11.2024
(51) Int. Cl.: B60L 53/30, B60L 53/53, B60L 53/65, B60L 53/66, B60L 53/68, B60L 53/80, B60L 58/21, B60S 5/06, B60L 3/12, B60L 58/12

(54) **BATTERY REPLACEMENT APPARATUS, INFORMATION PROVIDING DEVICE, BATTERY REPLACEMENT SYSTEM, AND BATTERY REPLACEMENT METHOD**

(30) Priority: 08.12.2023 JP 2023207660
(71) Applicant: TOYOTA JIDOSHA KABUSHIKI KAISHA, Aichi-ken, 471-8571 (JP)
(72) Inventor: ICHIKAWA, Shinji, Toyota-shi, 471-8571 (JP)
(74) Representative: TBK

(57) **Abstract**

A battery replacement apparatus (100) performs battery replacement for replacing a first battery (201) mounted in a vehicle (200) with a second battery (101). The battery replacement apparatus (100) includes a drive device (30) that performs battery replacement, and a processor (11) that controls the drive device (30). The processor (11) acquires first vehicle information for identifying the vehicle (200) and replacement battery information for identifying the second battery (101) from the vehicle (200) or a user of the vehicle (200). The processor (11) controls the drive device (30) using the replacement battery information and the first vehicle information to replace the first battery (201) with the second battery (101).

## Description

### BACKGROUND OF THE INVENTION

### 1. Field of the Invention

The present disclosure relates to a battery replacement apparatus, an information providing device, a battery replacement system, and a battery replacement method.

### 2. Description of Related Art

International Publication No. WO2019/181585 discloses a station management device for determining whether batteries stocked at a station can be rented out, based on at least one of vehicle-related information and user-related information recorded in the batteries.

In the system described in the foregoing International Publication NO. WO 2019/181585, it is required to record at least one of vehicle-related information and user-related information in a battery. In other words, rental of a battery (battery replacement) is not allowed for a vehicle equipped with a battery in which the above information is not recorded.

### SUMMARY OF THE INVENTION

The present disclosure provides a battery replacement apparatus, an information providing device, a battery replacement system, and a battery replacement method that are capable of performing battery replacement regardless of information recorded in a battery mounted in a vehicle.

According to an aspect of the present disclosure, a battery replacement apparatus is configured to perform battery replacement for replacing a first battery mounted in a vehicle with a second battery. The battery replacement apparatus comprises a drive device configured to perform the battery replacement, and a processor configured to control the drive device. The processor is configured to acquire first vehicle information that identifies the vehicle and replacement battery information that identifies the second battery from the vehicle or a user of the vehicle, and control the drive device using the replacement battery information and the first vehicle information to replace the first battery with the second battery.

As described above, the battery replacement apparatus controls the drive device using the replacement battery information and the first vehicle information acquired from the vehicle or the user of the vehicle such that the second battery is mounted in the vehicle. This enables the battery replacement apparatus to acquire the first vehicle information from the vehicle or the user of the vehicle even when the first vehicle information is not recorded on the first battery. As a result, the first battery on which the first vehicle information is not recorded can also be replaced with the second battery in the battery replacement apparatus. In other words, battery replacement can be performed regardless of the information recorded on the first battery mounted in the vehicle.

The processor may be configured to control the drive device using the replacement battery information and the first vehicle information acquired after the replacement battery information such that the second battery is mounted in the vehicle. With this configuration, the battery replacement apparatus can mount a second battery corresponding to the replacement battery information in a vehicle corresponding to the first vehicle information by using the replacement battery information and the first vehicle information obtained after the replacement battery information.

The battery replacement apparatus may further comprise an acquisition unit configured to acquire second vehicle information of the vehicle. The processor may be configured to control the drive device to replace the first battery with the second battery when the second vehicle information coincides with the first vehicle information. Such a configuration makes it possible to restrain battery replacement from being performed when the first vehicle information and the second vehicle information do not coincide with each other. As a result, it is possible to restrain a battery other than the second battery scheduled to be used for the battery replacement from being erroneously mounted in the vehicle. Note that the second vehicle information and the first vehicle information coinciding with each other includes not only a case where the first vehicle information and the second vehicle information are completely identical to each other, but also a case where the second vehicle information is included in the first vehicle information.

The acquisition unit may include a camera configured to image the vehicle. The second vehicle information may include information on a license plate of the vehicle imaged by the camera. Such a configuration enables the battery replacement apparatus to easily acquire the second vehicle information by using an image captured by the camera.

The acquisition unit may include a communication unit configured to perform near-field radio communication with the vehicle, and may be configured to receive the second vehicle information from the vehicle through the communication unit. Such a configuration enables the battery replacement apparatus to easily acquire the second vehicle information using near-field radio communication by the communication unit.

According to another aspect of the present disclosure, an information providing device is configured to provide information to a battery replacement apparatus that replaces a first battery mounted in a vehicle with a second battery. The information providing device is configured to provide the battery replacement apparatus with replacement battery information that identifies the second battery, and provide the battery replacement apparatus with vehicle information that identifies the vehicle.

As described above, the information providing device provides the battery replacement apparatus with the replacement battery information, and provides the battery replacement apparatus with the vehicle information of the vehicle. This makes it possible to provide the battery replacement apparatus with the vehicle information of the vehicle even when the first vehicle information is not recorded on the first battery. As a result, it is possible to provide an information providing device that is capable of performing battery replacement regardless of information recorded on the first battery mounted in the vehicle.

The information providing device may be configured to provide the battery replacement apparatus with the vehicle information after the replacement battery information is provided to the battery replacement apparatus. Such a configuration makes it possible to restrain the vehicle information of the vehicle from being provided to the battery replacement apparatus before the replacement battery information is provided to the battery replacement apparatus. As a result, it is possible to restrain the vehicle information from being provided to the battery replacement apparatus when battery replacement is not performed (for example, when a battery replacement contract is not established). As a result, it is possible to restrain leakage of vehicle information.

According to yet another aspect of the present disclosure, a battery replacement system comprises the battery replacement apparatus described above, and the information providing device described above. As a result, it is possible to provide a battery replacement system that is capable of performing battery replacement regardless of information recorded on the first battery mounted in the vehicle.

According to yet another aspect of the present disclosure, a battery replacement method for a battery replacement apparatus that replaces a first battery mounted in a vehicle with a second battery, comprises acquiring vehicle information that identifies the vehicle from the vehicle or a user of the vehicle, acquiring replacement battery information that identifies the second battery from the vehicle or the user, and replacing the first battery with the second battery using the replacement battery information and the vehicle information.

As described above, the process of mounting the second battery in the vehicle is executed by using the replacement battery information and the vehicle information acquired from the vehicle or the user of the vehicle. As a result, it is possible to provide a battery replacement method that can perform battery replacement regardless of the information recorded on the first battery mounted in the vehicle.

According to the present disclosure, battery replacement can be performed regardless of information recorded on a battery mounted in a vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a configuration of a system according to a first embodiment;
FIG. 2 is a diagram showing sequence control of a battery replacement system according to the first embodiment:
   FIG. 3 is a diagram showing a sequence following FIG. 2;
   FIG. 4 is a diagram showing a configuration of a system according to a second embodiment;
   FIG. 5 is a diagram showing sequence control of a battery replacement system according to the second embodiment; and
   FIG. 6 is a diagram showing sequence control of a battery replacement system according to modifications of the first and second embodiments.

### DETAILED DESCRIPTION OF EMBODIMENTS

Embodiments of the present disclosure will be described below in detail with reference to the drawings. In the drawings, the same or corresponding portions are designated by the same reference signs, and the description thereof will not be repeated.

### First Embodiment

### Configuration of Battery Replacement System

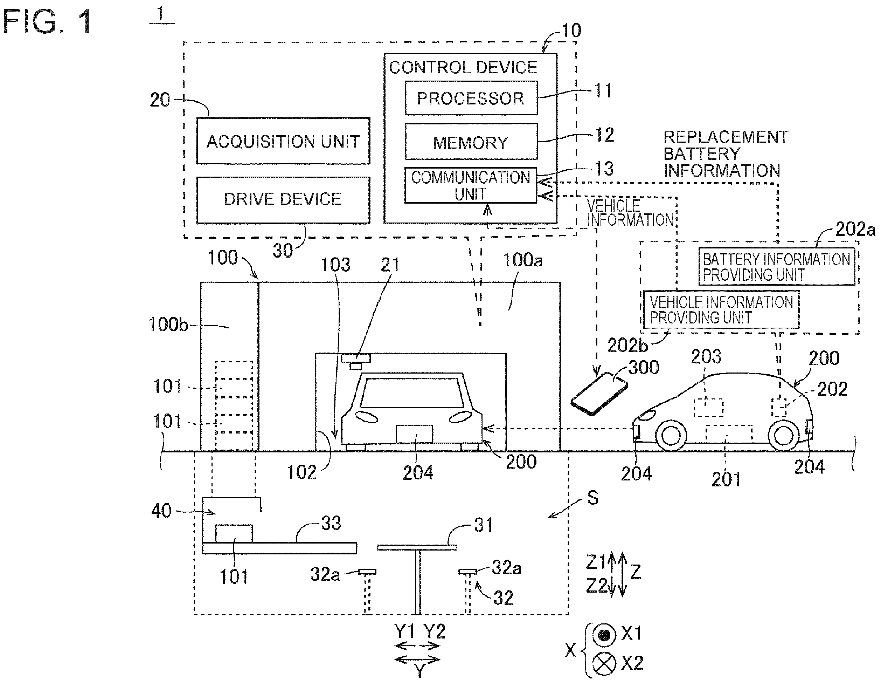

FIG. 1 is a diagram showing a battery replacement system 1 including a battery replacement apparatus 100 according to a first embodiment and an electrified vehicle 200. Note that the electrified vehicle 200 is an example of a "vehicle" in the present disclosure.

The electrified vehicle 200 includes a battery 201, a communication device 202, and an electronic control unit (ECU) 203. The electrified vehicles 200 is, for example, a plug-in hybrid electric vehicle (PHEV), a battery electric vehicle (BEV), or a fuel cell electric vehicle (FCEV).

The battery 201 stores electric power to be used to drive the electrified vehicle 200. The communication device 202 is configured to be capable of communicating with a communication apparatus outside the vehicle. The communication device 202 includes, for example, a data communication module (DCM). The ECU 203 controls various systems in the electrified vehicle 200. Note that the communication device 202 is an example of an "information providing device" in the present disclosure.

The communication device 202 includes a battery information providing unit 202a, and a vehicle information providing unit 202b. The battery information providing unit 202a provides (transmits) replacement battery information capable of identifying a battery 101 to be used for battery replacement to the battery replacement apparatus 100. The vehicle information providing unit 202b provides (transmits) vehicle information (vehicle identification number (VIN) and personal information such as a vehicle number) capable of identifying the electrified vehicle 200 to the battery replacement apparatus 100. Note that each of the battery information providing unit 202a and the vehicle information providing unit 202b represents software in which functional features of the communication device 202 are blocked. Details of each function will be described later. The vehicle information is an example of "first vehicle information" and "vehicle information" of the present disclosure.

The battery replacement apparatus 100 includes a battery replacement apparatus main body 100a in which battery replacement is performed, and a storehouse 100b in which batteries 101 are stored. The battery replacement apparatus main body 100a is an apparatus that performs battery replacement for replacing a battery 201 mounted in an electrified vehicle 200 with a battery 101. The storehouse 100b is established with the battery replacement apparatus main body 100a. The battery replacement apparatus 100 (battery replacement apparatus main body 100a) is provided with an entrance/exit 102 through which the electrified vehicle 200 enters and exits. Note that the battery 101 is an example of "second battery" in the present disclosure. The battery 201 is an example of "first battery" in the present disclosure.

A battery 101 stored in the storehouse 100b is moved to a temporary storage space 40 provided in an underfloor area S, and then transported to the electrified vehicle 200. Note that the underfloor area S is provided with a battery placement stand 31, a lifting unit 32, and a transport unit 33 which will be described later.

The battery replacement apparatus 100 (battery replacement apparatus main body 100a) includes a control device 10, an acquisition unit 20, and a drive device 30. The drive device 30 performs a battery replacement treatment. The control device 10 controls the drive device 30.

The control device 10 includes a processor 11, a memory 12, and a communication unit 13. Not only programs to be executed by the processor 11, but also information to be used by the programs (for example, maps, formulas, and various parameters) are stored in the memory 12. The processor 11 controls the drive device 30.

The communication unit 13 includes various communication I/Fs. The processor 11 controls the communication unit 13. The communication unit 13 communicates with the communication device 202, etc. of the electrified vehicle 200. The communication unit 13 and the electrified vehicle 200 (communication device 202) can communicate bidirectionally with each other. Note that the communication unit 13 can also communicate with a mobile terminal 300 owned by a user of the electrified vehicle 200. The first embodiment shows an example in which various information is exchanged between the communication device 202 of the electrified vehicle 200 and the communication unit 13 of the battery replacement apparatus 100.

The battery replacement apparatus 100 is provided with a vehicle stopping area 103. The battery replacement treatment is performed by the drive device 30 in a state where the electrified vehicle 200 is stopped in the vehicle stopping area 103. As a result, the battery 201 is replaced with the battery 101.

The acquisition unit 20 includes a camera 21. The camera 21 is installed in the battery replacement apparatus 100 (battery replacement apparatus main body 100a). The camera 21 captures an image of an electrified vehicle 200 that have entered the battery replacement apparatus main body 100a. As a result, a license plate 204 of the electrified vehicle 200 is imaged by the camera 21. The acquisition unit 20 acquires information (vehicle number) of the license plate 204 imaged by the camera 21. Note that the information on the license plate 204 is an example of the "second vehicle information" of the present disclosure.

The drive device 30 includes the battery placement stand 31, the lifting unit 32, and the transport unit 33. The lifting unit 32 moves the electrified vehicle 200 up and down by moving the electrified vehicle 200 up and down while holding them from below. The lifting unit 32 includes a pair of lifting bars 32a. The electrified vehicle 200 is supported from below by the pair of lifting bars 32a. Battery replacement (attachment and detachment of batteries) is performed in a state where the electrified vehicle 200 is held horizontally by the pair of lifting bars 32a.

The battery placement stand 31 is configured to be movable up and down in a Z direction. The battery placement stand 31 moves up to a height position of a bottom portion of the electrified vehicle 200, whereby the battery 201 removed from the electrified vehicle 200 is placed on the battery placement stand 31. Furthermore, the battery placement stand 31 on which the battery 101 is placed moves up to a height position of the bottom portion of the electrified vehicle 200, whereby the battery 101 is attached to the electrified vehicle 200.

The transport unit 33 is configured to be capable of transporting the batteries (201, 101). Specifically, the transport unit 33 transports, to the temporary storage space 40, the battery 201 that has been removed from the electrified vehicle 200 and placed on the battery placement stand 31. Furthermore, the transport unit 33 also transports, to the battery placement stand 31, the battery 101 that has been transported from the storehouse 100b to the temporary storage space 40.

Here, in a conventional battery replacement system, there is a case where whether rental of a battery stocked in a battery replacement apparatus is allowed or not is determined based on vehicle information recorded in the battery of the vehicle. However, this system requires that vehicle information be recorded in the battery in advance. In other words, when no vehicle information is recorded in the battery of the vehicle, rental of a battery (battery replacement) is not allowed for the vehicle.

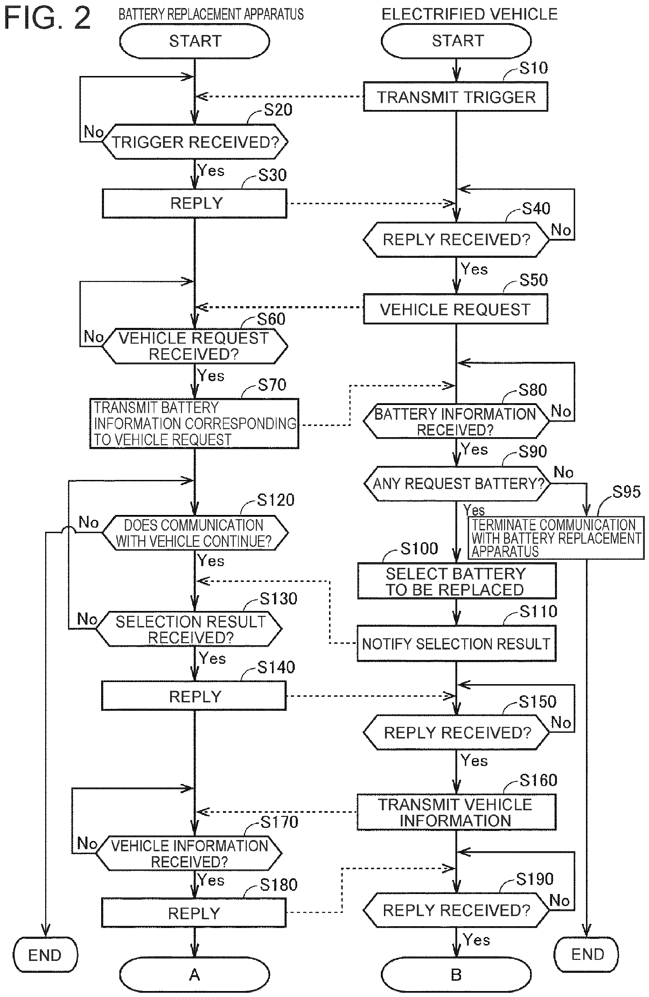

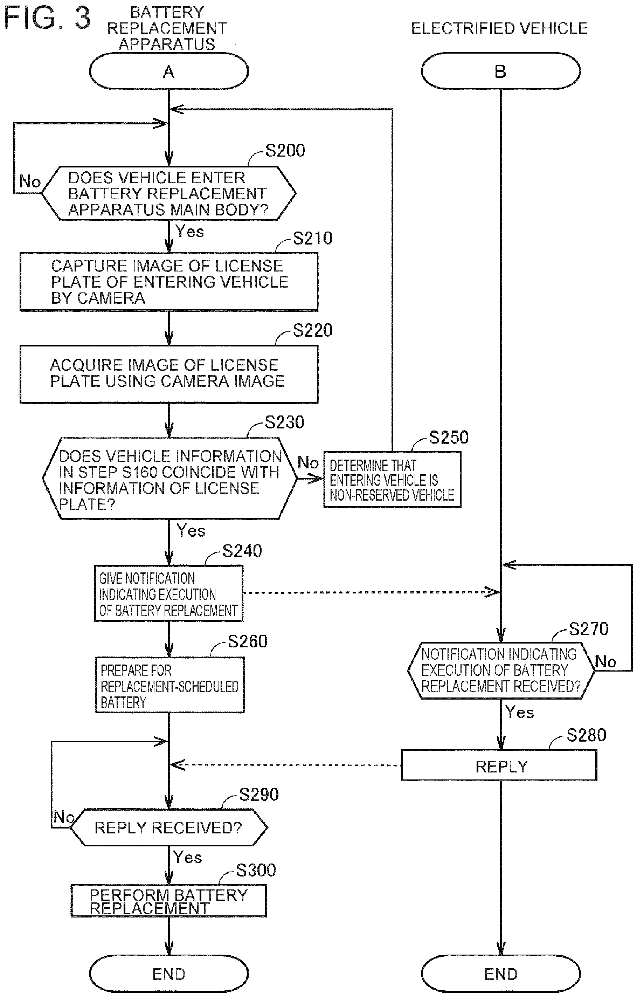

Therefore, in the first embodiment, the control device 10 of the battery replacement apparatus 100 uses replacement battery information and vehicle information acquired from the electrified vehicle 200 to control the drive device 30 such that the battery 201 is replaced with the battery 101. Specifically, the control device 10 controls the drive device 30 by using the replacement battery information and vehicle information transmitted from the electrified vehicle 200 to the communication unit 13. Details will be described later with reference to FIGS. 2 and 3.

### Battery Replacement Method

A battery replacement method by the battery replacement system 1 will be described with reference to the sequence diagrams of FIGS. 2 and 3. Note that in the sequences shown in FIGS. 2 and 3, the control of the electrified vehicle 200 is executed by the ECU 203, and the control of the battery replacement apparatus 100 is executed by the processor 11.

In step S10, the electrified vehicle 200 transmits a trigger signal for starting battery replacement through the communication device 202 to the battery replacement apparatus 100.

In step S20, the battery replacement apparatus 100 determines whether the trigger signal in step S10 has been received. If the trigger signal has been received (Yes in S10), the process proceeds to step S30. If no trigger signal has been received (No in S10), the process of step S20 is repeated.

In step S30, the battery replacement apparatus 100 transmits a reply to the trigger signal from the electrified vehicle 200 (a signal indicating that the trigger signal has been received) through the communication unit 13 to the electrified vehicle 200.

In step S40, the electrified vehicle 200 determines whether a reply in step S30 has been received. If the reply in step S30 has been received (Yes in S40), the process proceeds to step S50. If the reply in step S30 has not been received (No in S40), the process of step S40 is repeated.

In step S50, the electrified vehicle 200 transmits a vehicle request through the communication device 202 to the battery replacement apparatus 100. The vehicle request includes information on the sizes and types of batteries that can be installed in the electrified vehicle 200, information on the electrical characteristics (voltage, output electric power, and remaining capacity) of batteries suitable for the electrified vehicle 200, and the like.

In step S60, the battery replacement apparatus 100 determines whether the vehicle request in step S50 has been received. If the vehicle request has been received (Yes in S60), the process proceeds to step S70. If no vehicle request has been received (No in S60), the process of step S60 is repeated.

In step S70, the battery replacement apparatus 100 transmits information on all batteries 101 corresponding to the vehicle request in step S60 (satisfying the vehicle request) through the communication unit 13 to the electrified vehicle 200. Specifically, information on batteries 101 satisfying at least one of various requests in the vehicle request is transmitted to the electrified vehicle 200.

In step S80, the electrified vehicle 200 determines whether the battery information in step S70 has been received. If the battery information has been received (Yes in S80), the process proceeds to step S90. If no battery information has been received (No in S80), the process of step S80 is repeated.

In step S90, the electrified vehicle 200 determines whether the battery information in step S70 includes information on at least one battery 101. If information on at least one battery 101 exists in the battery information (Yes in S90), the process proceeds to step S100. If no information on any battery 101 exists in the battery information (No in S90), the process proceeds to step S95.

In step S95, the electrified vehicle 200 terminates communication with the battery replacement apparatus 100. Thereafter, the process of the electrified vehicle 200 ends.

In step S100, the electrified vehicle 200 selects a battery 101 to be used for battery replacement from among the batteries 101 included in the battery information in step S70. For example, the battery 101 to be used for battery replacement may be selected by the ECU 203 based on a predetermined selection criterion, or may be arbitrarily selected by a user.

In step S 110, the electrified vehicle 200 transmits a selection result of step S100 through the communication device 202 (the battery information providing unit 202a, see FIG. 1) to the battery replacement apparatus 100. Note that the selection result is an example of "replacement battery information capable of identifying a second battery" of the present disclosure.

In step S120, the battery replacement apparatus 100 determines whether communication with the electrified vehicle 200 is continuing. If the communication with the electrified vehicle 200 is continuing (Yes in S120), the process proceeds to step S130. If the communication with the electrified vehicle 200 has ended (No in S120), the process of the battery replacement apparatus 100 ends.

In step S130, the battery replacement apparatus 100 determines whether the selection result of step S 110 has been received. If the selection result has been received (Yes in S130), the process proceeds to step S140. If no selection result has been received (No in S130), the process returns to step S120.

In step S140, the battery replacement apparatus 100 transmits a reply to the selection result of step S 110 (a signal indicating that the selection result has been accepted) through the communication unit 13 to the electrified vehicle 200.

In step S150, the electrified vehicle 200 determines whether the reply in step S140 has been received. If the reply has been received (Yes in S150), the process proceeds to step S160. If the reply has not been received (No in S150), the process of step S150 is repeated.

In step S160, the electrified vehicle 200 transmits the vehicle information of the electrified vehicle 200 through the communication device 202 (vehicle information providing unit 202b, see FIG. 1) to the battery replacement apparatus 100. In other words, the vehicle information is transmitted to the battery replacement apparatus 100 after the above selection result is transmitted to the battery replacement apparatus 100.

In step S170, the battery replacement apparatus 100 determines whether the vehicle information in step S160 has been received. If the vehicle information has been received (Yes in S170), the process proceeds to step S180. If the vehicle information has not been received (No in S170), the process of step S170 is repeated.

In step S 180, the battery replacement apparatus 100 transmits a reply to the vehicle information of step S 160 (a signal indicating that the vehicle information has been received) through the communication unit 13 to the electrified vehicle 200. Thereafter, the battery replacement apparatus 100 proceeds to the process of step S200 (see FIG. 3).

In step S 190, the electrified vehicle 200 determines whether the reply in step S180 has been received. If the reply has been received (Yes in S190), the electrified vehicle 200 proceeds to the process of step S270 (see FIG. 3). If the reply has not been received (No in S190), the process of step S190 is repeated.

As shown in FIG. 3, in step S200, the battery replacement apparatus 100 determines whether the electrified vehicle 200 has entered the battery replacement apparatus main body 100a. The battery replacement apparatus 100 may determine, based on an image captured by the camera 21 (see FIG. 1) whether the electrified vehicle 200 has entered the battery replacement apparatus main body 100a. When the electrified vehicle 200 has entered the battery replacement apparatus main body 100a (Yes in S200), the process proceeds to step S210. Note that, at the time point of step S200, it is not identified whether a vehicle that has entered the battery replacement apparatus main body 100a is the electrified vehicle 200, but the description will be given on the assumption that the electrified vehicle 200 has entered.

In step S210, the battery replacement apparatus 100 acquires, through the camera 21, an image of the license plate 204 of the electrified vehicle 200 that has entered the battery replacement apparatus main body 100a in step S200.

In step S220, the battery replacement apparatus 100 uses the image captured by the camera 21 in step S210 to acquire vehicle information (information on the vehicle number) written on the license plate 204.

In step S230, the battery replacement apparatus 100 determines whether the vehicle information transmitted from the electrified vehicle 200 in step S 160 coincides with the information on the license plate 204. If the vehicle information in S160 and the information on the license plate 204 coincide with each other (Yes in S230), the process proceeds to step S240. If the vehicle information in S 160 and the information on the license plate 204 do not coincide with each other (No in S230), the process proceeds to step S250. Note that the vehicle information in S160 and the information on the license plate 204 coinciding with each other includes, for example, a case where the vehicle information in step S160 includes the information on the license plate 204.

In step S240, the battery replacement apparatus 100 notifies the electrified vehicle 200 through the communication unit 13 that battery replacement will be performed (started). Next, the process proceeds to step S260.

On the other hand, in step S250, the battery replacement apparatus 100 determines that the vehicle which has entered the battery replacement apparatus main body 100a is not the electrified vehicle 200 that transmitted the vehicle information in step S160 (is an unreserved vehicle). Thereafter, the process returns to step S200.

In step S260, the battery replacement apparatus 100 prepares a replacement-scheduled battery 101 (a battery 101 selected in step S100). Specifically, the battery replacement apparatus 100 controls the drive device 30 (the battery placement stand 31, the transport unit 33, etc.) such that the replacement-scheduled battery 101 is placed on the battery placement stand 31 (see FIG. 1).

In step S270, the electrified vehicle 200 determines whether a notification of executing battery replacement (the notification in step S240) has been received. If the notification has been received (Yes in S270), the process proceeds to step S280. If the notification has not been received (No in S270), the process of step S270 is repeated.

In step S280, the electrified vehicle 200 transmits a reply to the notification in step S240 (a signal indicating that the notification has been received) to the battery replacement apparatus 100. Thereafter, the process of the electrified vehicle 200 is terminated.

In step S290, the battery replacement apparatus 100 determines whether the reply in step S280 has been received. If the reply has been received (Yes in S290), the process proceeds to step S300. If the reply has not been received (No in S290), the process of step S290 is repeated.

In step S300, the battery replacement apparatus 100 executes the battery replacement process. Specifically, the battery replacement apparatus 100 controls the drive device 30 (the lifting unit 32, the battery placement stand 31, the transport unit 33, and the like) to replace the battery 201 of the electrified vehicle 200 with the battery 101 placed on the battery placement stand 31. Thereafter, the process of the battery replacement apparatus 100 is terminated.

As described above, in the first embodiment, the control device 10 of the battery replacement apparatus 100 uses the replacement battery information (selection result) and vehicle information acquired from the electrified vehicle 200 to control the drive device 30 such that the selected battery 101 is mounted in the electrified vehicle 200. This makes it possible to directly acquire the vehicle information from the electrified vehicle 200, so that it is unnecessary to perform a step of recording the vehicle information in the battery 201 or the like in advance. As a result, it is possible to perform battery replacement regardless of the information recorded in the battery 201 mounted in the electrified vehicle 200. Furthermore, the above recording step is unnecessary, which makes it possible to simplify the steps required for battery replacement.

Furthermore, in the first embodiment, after replacement battery information (selection result) is provided to the battery replacement apparatus 100, the vehicle information is provided to the battery replacement apparatus 100. This makes it possible to restrain vehicle information from being provided to the battery replacement apparatus 100 in a situation where the battery 101 to be used for replacement has not been decided (a contract has not been established). As a result, it is possible to restrain vehicle information (personal information) from being leaked unnecessarily.

### Second Embodiment

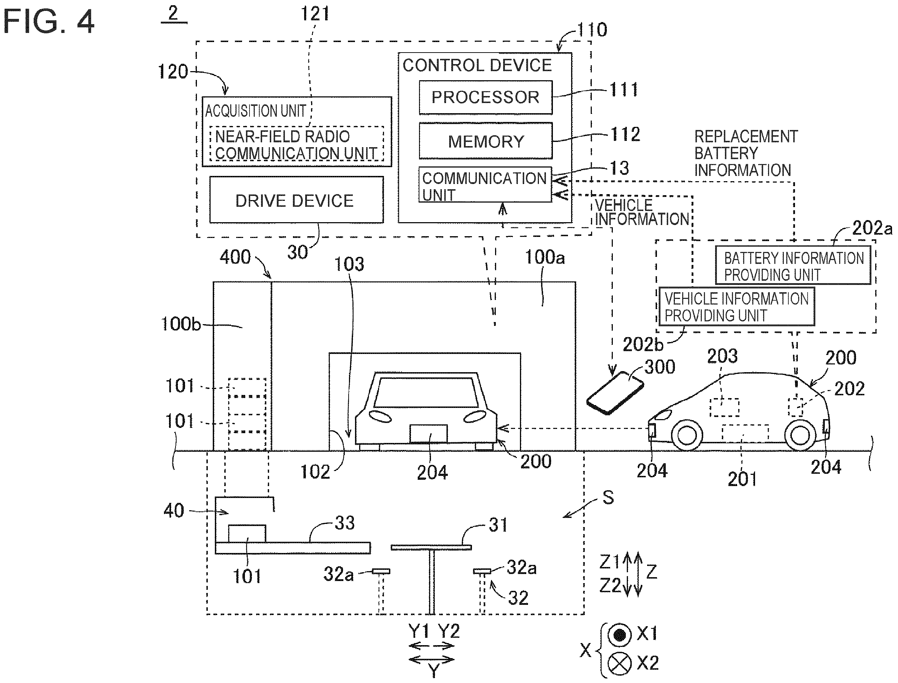

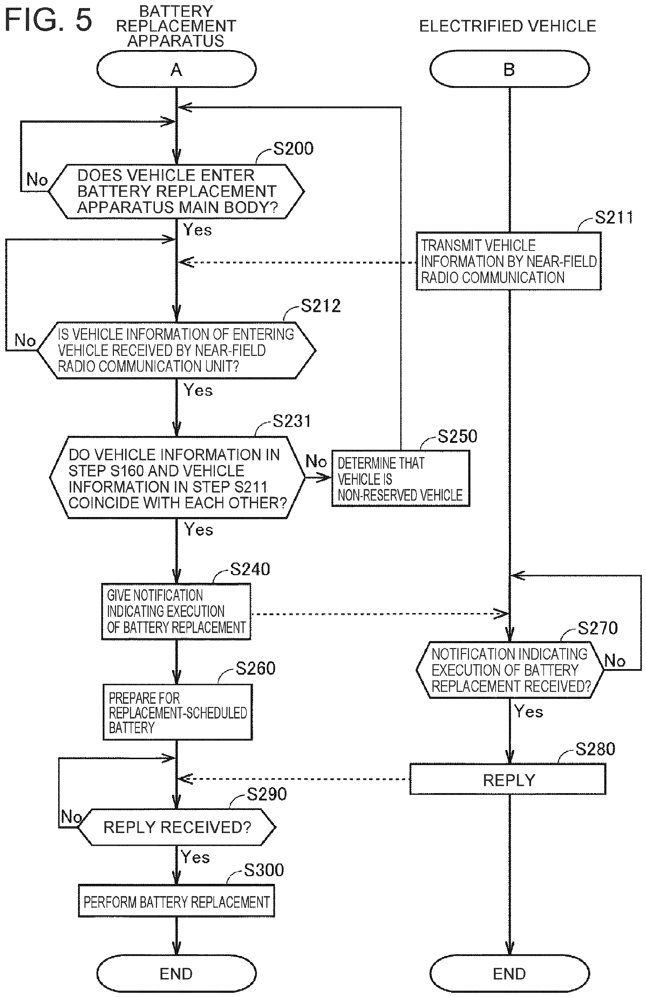

Next, a battery replacement system 2 according to a second embodiment will be described with reference to FIG. 4 and FIG. 5. The same components as those in the first embodiment are denoted by the same reference signs, and repetitive description thereon will not be made.

### Configuration of Battery Replacement System

FIG. 4 is a diagram showing the battery replacement system 2 including a battery replacement apparatus 400 and an electrified vehicle 200 according to the second embodiment.

The battery replacement apparatus 400 differs from the battery replacement apparatus 100 of the first embodiment in that it includes a control device 110 instead of the control device 10, and includes an acquisition unit 120 instead of the acquisition unit 20.

The control device 110 includes a processor 111, a memory 112, and a communication unit 13. The memory 112 stores not only programs to be executed by the processor 111, but also information to be used by the programs (for example, maps, formulas, and various parameters).

The acquisition unit 120 includes a near-field radio communication unit 121. The near-field radio communication unit 121 is configured to be capable of communicating with the electrified vehicle 200 with wi-fi (registered trademark), Bluetooth (registered trademark), or the like. Note that the near-field radio communication unit 121 is an example of "communication unit" in the present disclosure.

### Battery Replacement Method

FIG. 5 is a sequence diagram showing a battery replacement method of the battery replacement system 2 according to the second embodiment. In the sequence shown in FIG. 5, the control of the electrified vehicle 200 is performed by ECU 203, and the control of the battery replacement apparatus 400 is performed by the processor 111 of the control device 110. Note that the same processing steps as those in the sequence of the first embodiment are given the same reference signs, and repetitive description thereon will not be made.

In step S211, the electrified vehicle 200 transmits vehicle information (VIN, a vehicle number, etc.) to the battery replacement apparatus 400 (the near-field radio communication unit 121) by near-field radio communication. Note that the vehicle information is an example of "second vehicle information" in the present disclosure.

In the case of Yes in step S200, the battery replacement apparatus 400 executes the process of step S212. In step S212, the battery replacement apparatus 400 determines whether the vehicle information in step S211 has been received. If the vehicle information has been received (Yes in S212), the process proceeds to step S231. If the vehicle information has not been received (No in S212), the process of step S212 is repeated.

In step S231, it is determined whether the vehicle information in step S160 (see FIG. 2) and the vehicle information in step S211 coincide with each other. If these pieces of vehicle information coincide with each other (Yes in S231), the process proceeds to step S240. If these pieces of vehicle information do not coincide with each other (No in S230), the process proceeds to step S250. Note that the pieces of vehicle information coinciding with each other also includes, for example, a case where the vehicle information in step S160 includes the vehicle information in step S211.

The other configurations and controls are the same as those in the first embodiment, and therefore repetitive description thereon will not be made.

In the above first and second embodiments, an example has been shown in which information on the battery 101 meeting at least one of vehicle requests is transmitted to the electrified vehicle 200, but the present disclosure is not limited to this manner. Information on a battery 101 that does not meet the vehicle requests may be transmitted to the electrified vehicle 200.

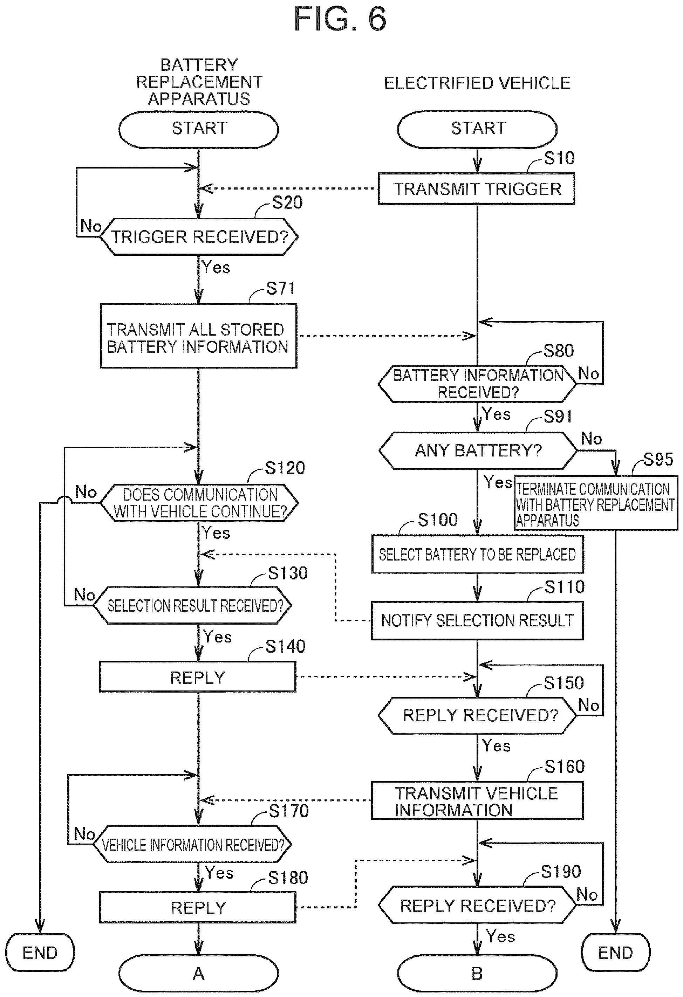

For example, sequence control shown in FIG. 6 may be executed. An example shown in FIG. 6 differs from the example shown in FIG. 2 in that the process of step S71 is executed instead of step S70 (see FIG. 2), the process of step S91 is executed instead of step S90 (see FIG. 2), and the processes of steps S30 to S60 (see FIG. 2) are not executed.

In step S71, the battery replacement apparatus 100 (110) transmits battery information on all batteries 101 stored in the battery replacement apparatus 100 (110) (possessed by the battery replacement apparatus 100 (110)) through the communication unit 13 to the electrified vehicle 200. Thereafter, the process proceeds to step S120. In step S91, it is determined whether the battery information transmitted in step S71 includes information on at least one battery 101. If information on at least one battery 101 is included (Yes in S91), the process proceeds to step S100. If the battery information does not include any information on batteries 101 (No in S91), the process proceeds to step S95.

The above first and second embodiments show the example in which the vehicle information and the replacement battery information (selection result) are transmitted from the electrified vehicle 200 to the battery replacement apparatus 100 (110), but the present disclosure is not limited to this manner. For example, at least one of the vehicle information and the replacement battery information may be transmitted from the mobile terminal 300 to the battery replacement apparatus 100 (110).

The above first and second embodiments show the example in which the electrified vehicle 200 transmits the replacement battery information (selection result) to the battery replacement apparatus 100 (110), and then transmits the vehicle information (first vehicle information) to the battery replacement apparatus 100 (110), but the present disclosure is not limited to this manner. For example, the electrified vehicle 200 may transmit the replacement battery information and the vehicle information to the battery replacement apparatus 100 (110) at the same time.

The first embodiment shows the example in which it is determined based on the vehicle number whether the electrified vehicle is a reserved vehicle, but the present disclosure is not limited to this manner. For example, the above determination may be made based on a code issued at the reception of the battery replacement apparatus 100, a registration ID or the like.

The above first and second embodiments shows the example in which the electrified vehicle 200 and the battery replacement apparatus 100 (110) communicate directly with each other, but the present disclosure is not limited to this manner. For example, the electrified vehicle 200 and the battery replacement apparatus 100 (110) may communicate indirectly with each other via an external server.

The above first and second embodiments show the example in which batteries 101 are stored in the battery replacement apparatus 100 (110), but the present disclosure is not limited to this manner. The batteries 101 to be used for battery replacement may be stored outside the battery replacement apparatus 100 (110).

The above first and second embodiments show the example in which the vehicle information (second vehicle information) is acquired by the battery replacement apparatus 100 (110) when the electrified vehicle 200 enters the battery replacement apparatus main body 100a, but the present disclosure is not limited to this manner. For example, the vehicle information may be acquired before the electrified vehicle 200 enters the battery replacement apparatus main body 100a.

The embodiments disclosed herein are illustrative and not restrictive in all respects. The scope of the present disclosure is indicated by the claims, not by the description of the above embodiments, and includes all changes within a range equivalent to the scope of the claims.

## Claims

1. A battery replacement apparatus (100; 400) configured to perform battery replacement of replacing a first battery (201) mounted in a vehicle (200) with a second battery (101), comprising:
a drive device (30) configured to perform the battery replacement; and
a processor (11; 111) configured to control the drive device (30),
wherein the processor (11; 111) is configured to
acquire first vehicle information that identifies the vehicle (200) and replacement battery information that identifies the second battery (101) from the vehicle (200) or a user of the vehicle (200), and
control the drive device (30) using the replacement battery information and the first vehicle information to replace the first battery (201) with the second battery (101).

2. The battery replacement apparatus (100; 400) according to claim 1, wherein the processor (11; 111) is configured to control the drive device (30) using the replacement battery information and the first vehicle information acquired after the replacement battery information to replace the first battery (201) with the second battery (101).

3. The battery replacement apparatus (100; 400) according to claim 1 or 2, further comprising an acquisition unit (20; 120) configured to acquire second vehicle information of the vehicle (200),
wherein the processor (11; 111) is configured to control the drive device (30) to replace the first battery (201) with the second battery (101) when the second vehicle information coincides with the first vehicle information.

4. The battery replacement apparatus (100) according to claim 3, wherein
the acquisition unit (20) includes a camera (21) configured to image the vehicle (200), and
the second vehicle information includes information on a license plate (204) of the vehicle (200) imaged by the camera (21).

5. The battery replacement apparatus (400) according to claim 3, wherein the acquisition unit (120) includes a communication unit (121) configured to perform near-field radio communication with the vehicle (200), and is configured to receive the second vehicle information from the vehicle (200) through the communication unit (121).

6. An information providing device (202) configured to provide information to a battery replacement apparatus (100; 400) that replaces a first battery (201) mounted in a vehicle (200) with a second battery (101),
wherein the information providing device (202) is configured to
provide the battery replacement apparatus (100; 400) with replacement battery information that identifies the second battery (101), and
provide the battery replacement apparatus (100; 400) with vehicle information that identifies the vehicle (200).

7. The information providing device (202) according to claim 6, wherein the information providing device (202) is configured to provide the vehicle information to the battery replacement apparatus (100; 400) after the replacement battery information is provided to the battery replacement apparatus (100; 400).

8. A battery replacement system (1) comprising:
a battery replacement apparatus (100; 400) configured to perform battery replacement of replacing a first battery (201) mounted in a vehicle (200) with a second battery (101); and
an information providing device (202) configured to provide information to the battery replacement apparatus (100; 400), wherein
the battery replacement apparatus (100; 400) includes:
a drive device (30) configured to perform the battery replacement; and
a processor (11; 111) configured to control the drive device (30),
the processor (11; 111) is configured to
acquire vehicle information that identifies the vehicle (200) and replacement battery information that identifies the second battery (101) from the vehicle (200) or a user of the vehicle (200), and
control the drive device (30) using the replacement battery information and the vehicle information to replace the first battery (201) with the second battery (101), and
the information providing device (202) is configured to provide the battery replacement apparatus (100; 400) with the replacement battery information and the vehicle information.

9. The battery replacement system (1) according to claim 8, wherein the processor (11; 111) is configured to control the drive device (30) using the replacement battery information and the vehicle information acquired after the replacement battery information to replace the first battery (201) with the second battery (101).

10. The battery replacement system (1) according to claim 8, wherein the information providing device (202) is configured to provide the vehicle information to the battery replacement apparatus (100; 400) after the replacement battery information is provided to the battery replacement apparatus (100; 400).

11. A battery replacement method for a battery replacement apparatus (100; 400) that replaces a first battery (201) mounted in a vehicle (200) with a second battery (101), comprising:
acquiring vehicle information that identifies the vehicle (200) from the vehicle (200) or a user of the vehicle (200);
acquiring replacement battery information that identifies the second battery (101) from the vehicle (200) or the user; and
replacing the first battery (201) with the second battery (101) using the replacement battery information and the vehicle information.
